# EUROPEAN PATENT SPECIFICATION

(11) **EP 0 745 561 B1**
(45) Date of publication and mention of the grant of the patent: **24.05.2000**
(21) Application number: 96109638.5
(22) Date of filing: 16.03.1993
(51) Int. Cl.: C02F 1/70, C02F 9/00

(54) **Method of decomposing volatile organic halogenated compounds in water**
Verfahren zum Zersetzen von organischen halogenierten flüchtigen Verbindungen in Wasser
Méthode de décomposition dans l'eau de composés halogènes organiques volatiles

(30) Priority: 25.03.1992 JP 9872792; 23.04.1992 JP 12997592
(43) Date of publication of application: 04.12.1996
(62) Divisional of application: 93104226.1
(73) Proprietor: KURITA WATER INDUSTRIES LTD., Shinjuku-ku Tokyo (JP)
(72) Inventor: Miyabe, Kanji, c/o Kurita Water Ind. Ltd., Shinjuku-ku, Tokyo (JP); Orita, Nobuhiro, c/o Kurita Water Ind. Ltd., Shinjuku-ku, Tokyo (JP); Iwasaki, Makoto, c/o Kurita Water Ind. Ltd., Shinjuku-ku, Tokyo (JP); Tsurumaru, Yohka, c/o Kurita Water Ind. Ltd., Shinjuku-ku, Tokyo (JP); Nakahara, Toshitsugu, c/o Kurita Water Ind. Ltd., Shinjuku-ku, Tokyo (JP)
(74) Representative: Gille Hrabal Struck Neidlein Prop Roos

(56) References cited:
- WO-A-91/17229
- FR-A- 2 385 415

## Description

### BACKGROUND OF THE INVENTION

This application is a divisional application from EP 93 104 226.1 (0 563 669).

### 1. Field of the invention

The present invention relates to a novel method of decomposing volatile organic halogenated compounds in water containing the volatile organic halogenated compounds in an amount of 20 ppm or less and metal ions, which comprises removing the metal ions from the water by one or more treatments selected from the group consisting of an ion exchange treatment, a chelate resin treatment and an oxidation-coagulation-precipitation treatment and then contacting the metal ion deionized water with a reducing agent in the presence of a metal catalyst in order to decompose the volatile organic halogenated compounds contained in the water efficiently by reduction to make the water harmless.

### 2. Description of the prior art

Volatile organic halogenated compounds must be removed from a ground water, a waste water and soil because they cause environmental pollution. Various methods have been examined for the treatment of service water and a waste water containing volatile organic halogenated compounds. Examples of such methods are: (1) aeration treatment, (2) adsorption treatment, (3) decomposition treatment by oxidation, (4) biological treatment and (5) thermal decomposition. However, these methods have various problems and are not satisfactory.

For example, the method (1) simply transfers the organic halogenated compounds from an underground water or soil to the atmosphere and does not bring a fundamental solution to the environmental problem. The method (2) can catch or recover the organic halogenated compounds and is applied in combination with the method (1) in many cases. This method has a problem that the adsorption capacity of the adsorbent, such as an activated charcoal, is inevitably decreased by the influence of moisture. The method of adsorption has another problem that the adsorbent must be regenerated. When it is regenerated by using steam, a waste water containing a high concentration of the organic halogenated compounds is discharged.

For the fundamental solution of the environmental pollution, a degradation method of the organic halogenated compounds, such as the methods (3) to (5), is required. The method of decomposition by oxidation (3) has been actively examined for the decomposition of the halogen compounds. Many reports can be found on the methods utilizing ultraviolet light, ozone, hydrogen peroxide and the like. Though reports are also found on the decomposition by the methods (4) and (5), the number of them is not so many.

In the methods of decomposition by oxidation and thermal decomposition described above, a large amount of energy is required for generation of ultraviolet light and ozone or for heating. Thus, the methods have problems that they inevitably lead to a higher cost of treatment and that organic halogenated compounds may be newly generated because the halogen formed by the decomposition reaction easily reacts with organic compounds present in the neighborhood. The method of biological decomposition (4) requires less amount of energy for the treatment but microbiologies which can efficiently decompose the organic halogenated compounds have not been discovered. Thus, the method of biological decomposition is not practical either. A method of decomposition by reduction utilizing iron powder as a reducing agent was reported but this method is not yet practical either.

### SUMMARY OF THE INVENTION

The present invention accordingly has an object to overcome the problems of the conventional methods of treatment of the fluid containing volatile organic halogenated compounds and to provide a practical method of treatment of the fluid containing volatile organic halogenated compounds which efficiently decomposes the volatile organic halogenated compounds contained in the fluid with a small amount of energy and makes the fluid harmless.

Extensive investigations undertaken by the present inventors with the objects described above lead to a discovery that, when the fluid containing volatile organic halogenated compounds are brought into contact with a reducing agent in the presence of a metal catalyst, the volatile organic compounds in the fluid are efficiently decomposed to harmless hydrocarbons, carbon dioxide and hydrogen halides. Hydrogen halides generated do not easily react again with organic compounds present in the neighborhood. It was also discovered that products of the decomposition as well as the volatile organic halogenated compounds themselves can be effectively made harmless by treating the decomposed fluid with an additional treatment, such as an adsorption treatment, the thermal decomposition treatment and the biological decomposition treatment. The present invention has been completed on the basis of the discovery.

Thus, the method of treatment of a fluid containing volatile organic halogenated compounds of the invention comprises bringing the fluid containing volatile organic halogenated compounds in contact with a reducing agent in the presence of a metal catalyst.

The method of treatment of a fluid containing volatile organic halogenated compounds of the invention also comprises bringing the fluid containing volatile organic halogenated compounds into contact with a reducing agent in the presence of a metal catalyst and then treating the fluid with at least one treatment selected from the group consisting of an adsorption treatment, a thermal decomposition and a biological treatment.

Other and further objects, features and advantages of the invention will appear more completely in the following description.

In the following description the numbers and characters have the meanings as listed in the following:
A: a column of catalyst
B: a column of packing
C: an air-stripping tower
D: an air-stripping tower
E: an air-stripping tower
F: a column of adsorbent
G: a phase separation tank
H: an aeration tank
I: a tank for mixing

### DETAILED DESCRIPTION OF THE INVENTION

The invention is described in detail in the following.

The volatile organic halogenated compound to which the present invention is applied has a boiling point generally of 150°C or lower and preferably of 80°C or lower. Examples of the volatile organic halogenated compound are trichloroethylene, tetrachloroethylene, trans-1,2-dichloroethylene, cis-1,2-dichloroethylene, carbon tetrachloride, chloroethane, methylene chloride, chloroform, vinyl chloride, 1,1-dichloroethane, 1,2-dichloroethane, 1,2-dichloropropane, dichlorobromoethylene, 1,1,1-trichloroethane, bromodichloromethane, chlorodibromomethane, bromoform, various kinds of chlorofluorohydrocarbons or chlorofluorocarbons (referred as "flons" hereinafter) and the like.

The fluid containing volatile organic halogenated compounds treated by the method of the invention is a water containing one or more kinds of the volatile organic halogenated compound described above. Examples of the water containing volatile organic halogenated compounds are a water containing the volatile organic halogenated compounds discharged from various kinds of manufacturing processes, a service water, a drained water and an underground water containing the volatile organic halogenated compounds, fluids obtained by extracting the volatile organic halogenated compounds contained in soil with water and the like, a water discharged from regeneration of an adsorbent with steam after the adsorbent is brought into contact with the volatile organic halogenated compounds and the like fluids.

The catalyst used in the invention is a metal catalyst supported on a carrier. Examples of the metal catalyst are palladium, platinum, ruthenium, rhodium, copper, iron, iridium, nickel and the like. Preferable examples among them are catalysts of noble metals, such as palladium, platinum, ruthenium, rhodium and the like. More preferable examples are catalysts of palladium and platinum. As the metal catalyst, an elementary metal or oxides or hydroxides of the metal can be utilized.

Examples of the carrier are alumina, titania, activated charcoal, zirconia, zeolite, glass, silica, silica-alumina, ion exchange resins, plastic pellets and the like. Preferable examples among them are alumina, titania, silica and ion exchange resins. As the ion exchange resin, weak basic anion exchange resins based on copolymers of styrene and divinyl benzene are preferred. The amount of the metal supported on the carrier is generally 0.1 to 10 weight % based on the amount of the carrier.

The shape of the carrier is not particularly limited but any kinds of shape, such as powder, granule and pellet, can be utilized. When the carrier has a shape of granule or pellet, it can be packed into a column and the fluid for treatment can be passed through the column continuously. When the carrier has a shape of powder, it can be packed into a column and the operation can be conducted in the condition of fluidized bed.

As the reducing agent utilized in the invention, a reducing gas, such as hydrogen gas, or a reducing agent which generates hydrogen by the contact with the catalyst described above, such as hydrazine, hydroxylamine and sodium hydride, can be preferably utilized in the decomposition treatment by reduction in the liquid phase. In the decomposition treatment by reduction in the gas phase, a reducing gas, such as hydrogen gas, can be preferably utilized. The hydrogen gas can be supplied by electrolysis, from a bomb, by utilizing a hydrogen absorbing metal and from the like sources. The amount of the reducing agent for use is preferably 1 to 80 times the equivalent of the agent required for substitution of the halogen contained in the volatile organic halogenated compounds in the decomposition by reduction in the liquid phase and 100 to 100,000 volume parts per 1 volume part of the halogenated compounds in the decomposition by reduction in the gas phase. When the decomposition treatment is conducted in the gas phase and hydrogen is utilized as the reducing agent, the concentration of hydrogen gas in the air is not allowed to exceed 4 %. The temperature of the decomposition treatment by reduction is in the range from 60 to 120°C in the decomposition in the gas phase and in the range from 10 to 60°C in the decomposition in the liquid phase. A higher temperature in these ranges is desirable.

The method of the invention is described more specifically in the following.
(1) When the fluid for treatment is a water containing the volatile organic halogenated compounds, the fluid occasionally contains substances which adversely affect the performance of the catalyst in the liquid phase. For performing the stable treatment of reduction in the liquid phase during a long time, it is required that the substances are removed before the fluid is treated with the decomposition by reduction. The substances adversely affecting the property of reduction affect the reaction possibly through chemical effects on the catalytic reaction itself and physical effects, such as fouling of the catalyst surface.
   Examples of the substances adversely affecting the treatment in the liquid phase are ions of metals, such as iron, manganese and hardness components. As the method of removing the ions of metals, treatment of ion exchange, treatment with a chelate resin and treatment by oxidation-coagulation-precipitation can be utilized. For specifically removing iron and manganese in the water for treatment, treatment of oxidation and coagulation-precipitation can be utilized.
(2) When the fluid for treatment is a water containing the volatile organic halogenated compounds and a reducing gas, such as a hydrogen gas, is utilized as the reducing agent, it is advantageous that a process of dissolving the reducing agent into the water for treatment is added before the water is treated by the reduction in the liquid phase. In an example of the method of dissolving the reducing agent into the water for treatment, the water containing volatile organic halogenated compounds is charged at the top of the column packed with packings like glass beads on the catalyst layer and flows down in such a way that continuous, vacant spaces are left in the packed column, while the reducing gas is also charged to the packed column and is passed through it in such a way that the gas passes through the continuous vacant spaces in the column. Contacting with the water containing volatile organic halogenated compounds, the reducing gas is dissolved in the water during the passage through the column. The reducing gas may also be dissolved into the water for treatment by utilizing a porous membrane.

Different construction designs may be utilised to perform the inventive method, which possible construction designs will be described hereafter as specific embodiments of the inventive method.

### Embodiment (i).

The first embodiment (i) concerns an apparatus favorably utilized for performing the method of invention. The apparatus has a structure in which a catalyst layer packed with a metal catalyst is placed at the lower part of a column and a further packed layer packed with packings like glass beads is placed at the upper part of the same column. Water containing the volatile organic halogenated compounds (feed water) is charged at the top of the column and the reducing gas is charged from another inlet placed at the top of the column. The water for treatment and the gas are brought into contact with each other in the upper packed layer to dissolve the reducing gas into the water for treatment. The water is then treated at the catalyst layer by catalytic reduction and the treated water is discharged from the bottom of the catalyst layer.

In this apparatus, the water for treatment is charged at the top of the upper packed layer and flows down along the surface of the packings in such a way that vacant spaces are left between the packing materials. The water contacts with the reducing gas present in the vacant spaces between the packings and the reducing gas is dissolved into the water for treatment efficiently. The water containing the reducing gas is treated in the lower catalyst layer and the volatile organic halogenated compounds contained in it are efficiently decomposed b the reduction.

The apparatus according to this embodiment is one of the favorable examples of the apparatus to perform the method of the invention but the apparatus for performing the method of the invention is not limited to this example. As another example, the packed layer and the catalyst layer are not placed within the same column but in separate columns connected with each other.

(3) When the fluid for treatment contains a high concentration of the volatile organic halogenated compounds, treatment of the fluid makes problems that, when the fluid is gas, the amount of the reducing gas, such as a hydrogen gas, used for the treatment must be increased to cause increased danger of explosion and that, when the fluid is liquid, the amount of the reducing gas must be increased like the case of the gaseous fluid and a pressure vessel must be utilized for addition of the reducing gas at a high pressure. Therefore, when a fluid containing a high concentration of the volatile organic halogenated compounds is treated, it is preferred that the concentration of the volatile organic halogenated compounds in the fluid is decreased by bringing the fluid into contact with an adsorbent before the decomposition treatment and then the fluid containing the residual volatile organic halogenated compounds is treated with the decomposition by reduction. The high concentration of the volatile organic halogenated compounds in the fluid generally means a concentration of 20 ppm or more when the fluid is liquid.

When the fluid for treatment is a water containing a high concentration of the volatile organic halogenated compounds, the water may be brought into contact with an adsorbent without such a pre-treatment or may be treated with aeration in advance to get the stripped gas and then the gas is brought into contact with an adsorbent .

Examples of the adsorbent are activated charcoal, silica, zeolite and the like. Activated charcoal is preferable among them. The shape of the adsorbent is not particularly limited but various kinds of shape, such as powder, granule, fiber, non-woven fabric and woven fabric, may be adopted. The adsorbent is generally utilized by packing in a column. The form of the packed column is not particularly limited but various forms, such as the fixed bed form, the fluidized bed form and the honey comb rotary form, may be utilized. The amount of the adsorbent is not particularly limited but generally in the range from 10 to 1,000 g per 1 g of the volatile organic halogenated compounds.

It is preferred that the concentration of the volatile organic halogenated compounds in the fluid after the treatment with the adsorbent described above is generally 10 ppm or less when the fluid is a liquid. When the concentration is in this range, the treatment of catalytic reduction in the next process can be facilitated. The speed of charging the fluid to the adsorbent is in the range from 10 to several tens hr⁻¹, as expressed by the space velocity respectively.

After the adsorption of the volatile organic halogenated compounds, the adsorbent can be regenerated with a heated gas, such as steam and nitrogen. The volatile organic halogenated compounds are contained in the water and in the gas discharged from the regeneration in very high concentrations and the volatile organic compounds are preferably recovered as much as possible. The compounds still remaining after the recovering treatment are treated with the decomposition by the catalytic reduction.

### Embodiment (ii)

According to a further embodiment for performing the method of invention water for treatment (feed water) containing the volatile organic halogenated compounds is charged at the top of an air-stripping tower C and, at the same time, air is blown into the bottom of this tower C. The air containing the volatile organic halogenated compounds is discharged from the upper part and the treated water is discharged from the bottom of the air-stripping tower C. In a next step the treated water is charged at the top of a further air-stripping tower D and air is blown into the bottom of this further tower. The air streams containing the volatile organic halogenated compounds discharged from the tops of both air-stripping towers C and D are combined together and charged into the top of the adsorbent column F. The treated water discharged from the bottom of the further air-stripping tower D is stored in a tank for treated water. The stored treated water is utilized or disposed depending on the purpose of the operation. This embodiment concerns the operation utilizing two air-stripping towers. However, the method of the invention is not limited to the method of two towers.

In the adsorbent column F, the volatile organic halogenated compounds are removed by adsorption with the hydrophobic interaction. The air from which most of the volatile organic halogenated compounds has been removed is charged to the bottom of a catalyst column A together with the reducing gas, such as a hydrogen gas, and the residual volatile organic halogenated compounds in the air are decomposed by reduction. The air thus treated is disposed into the atmosphere from the upper part of the catalyst column A.

When the adsorbent column F is saturated with the volatile organic halogenated compounds, the charging of the air containing volatile organic halogenated compounds is stopped and steam is fed to the top of the adsorbent column F in order to regenerate the adsorbent in the column F. The steam containing the volatile organic halogenated compounds discharged from the bottom of the adsorbent column F is condensed in a condenser K and stored in a phase separation tank G. In the separation tank G, the fluid is separated to the upper layer of a saturated water containing the volatile organic halogenated compounds and the lower layer of the volatile organic halogenated compounds. The water containing the volatile organic halogenated compounds at the upper layer is recycled to the line of the feed water. The volatile organic halogenated compounds at the lower layer are recovered for reuse as a solvent.

According to this embodiment the volatile organic halogenated compounds in the water for treatment are transferred to the air by the aeration and then treated. However, the water can be treated without such intermediate treatment.

(5) By the same method as in (3), the fluid containing volatile organic halogenated compounds is brought into contact with the adsorbent to remove the volatile organic halogenated compounds. Then, the adsorbent is regenerated with a nitrogen gas. The volatile organic halogenated compounds discharged by the regeneration are decomposed by reduction by bringing the gas into contact with a reducing agent in the presence of a metal catalyst. The fluid containing volatile organic halogenated compounds is efficiently treated by the method described above.

### Embodiment (iii)

According to this embodiment of the invention water for treatment (feed water) containing the volatile organic compounds is charged at the top of an air-stripping tower C and, at the same time, air is blown into the bottom of this tower C. In the air-stripping tower, the volatile organic halogenated compounds are transferred to the air and removed. The treated water is stored in a tank L. The gas containing the volatile organic halogenated compounds is sent to an adsorbent column F and the volatile organic halogenated compounds contained in the gas are removed by adsorption. The air discharged from the column F is removed into the atmosphere.

When the amount of the compounds adsorbed to the adsorbent in the adsorbent column F has reached saturation, a nitrogen gas heated to 100 to 200°C by a heater or a heat exchanger M is introduced in order to regenerate the adsorbent. The volatile organic halogenated compounds adsorbed by the adsorbent are transferred to the nitrogen gas by this operation. The nitrogen gas containing the volatile organic halogenated compounds is then introduced to the catalyst column A together with the reducing gas, such as a hydrogen gas, and the volatile organic halogenated compounds are decomposed by reduction. The nitrogen gas discharged from the decomposition process may be utilized for the regeneration of the adsorbent.

In this example, the volatile organic halogenated compounds in the water for treatment are transferred to the air by the aeration and then treated. However, the water can be treated without such intermediate treatment.

(6) By the same method as in (3), the fluid containing volatile organic halogenated compounds is brought into contact with the adsorbent to remove the volatile organic halogenated compounds. Then, the adsorbent is regenerated with steam. The volatile organic halogenated compounds contained in the condensed water discharged by the regeneration or in the gas by the aeration of the discharged condensed water are decomposed by reduction by bringing the condensed water discharged from the regeneration or the gas from the aeration of the discharged condensed water into contact with the reducing agent in the presence of the metal catalyst. The fluid containing volatile organic halogenated compounds is efficiently treated as described above.

### Embodiment (iv).

According to this further embodiment of the inventive method water for treatment (feed water) containing the volatile organic compounds is charged at the top of an air-stripping tower C and, at the same time, air is blown into the bottom of the air-stripping tower C. In the air-stripping tower, the volatile organic halogenated compounds are transferred to the air and removed. The treated water is stored in a tank. The gas containing the volatile organic halogenated compounds is sent to the adsorbent column F and the volatile organic halogenated compounds are removed by adsorption. The air from the column F is disposed into the atmosphere.

When the amount of the compounds adsorbed to the adsorbent in the adsorbent column F has reached saturation, steam is sent to the adsorbent to regenerate it. The gas discharged by the regeneration is condensed with a condenser and the fluid condensed here is sent to a separation tank G. In the separation tank G, the fluid is separated to the upper layer of water containing the volatile organic halogenated compounds and the lower layer of the volatile organic halogenated compounds. The volatile organic halogenated compounds at the lower layer is recovered for reuse as a solvent. The saturated water containing the volatile organic halogenated compounds at the upper layer is sent to the catalyst column A after addition of the reducing agent, such as a hydrogen gas. The volatile organic halogenated compounds contained in the water are decomposed by reduction and the treated water is discharged. When the amount of the volatile organic halogenated compounds in the treated water is more than a specified amount, the treated water is recycled to the charge line to the catalyst column and the decomposition by reduction is repeated.

### Embodiment (v).

According to yet a further embodiment for conducting the method described above, water from the separation tank G is transferred to an aeration tank H and the water is treated with the aeration with an inert gas, such as a nitrogen gas, to bring the volatile organic halogenated compounds into a gas phase. After adding the reducing gas, such as a hydrogen gas, to the gas containing the volatile organic halogenated compounds, the mixed gas is transferred to the catalyst column A by the same method as described above and the volatile organic halogenated compounds are decomposed by reduction. The gas discharged from the catalyst column A may be disposed or reused as the gas for aeration.

In this example, the volatile organic halogenated compounds in the water for treatment are transferred to the air by the aeration and then treated. However, the water for treatment can be treated without such intermediate treatment.

(7) The fluid containing volatile organic halogenated compounds generally contains oxygen too. Competitive reactions of the volatile organic halogenated compounds and oxygen with hydrogen take place in the reduction degradation treatment. As the reducing agent is consumed by the reaction with oxygen to a larger extent, the ability of reduction is decreased further and naturally a large amount of the reducing agent is required. Because of this reason, it is necessary to reduce the influence of oxygen present in the reaction system on the performance of this reduction treatment.

The method of multi-stage reduction is effective for overcoming this problem. For example, when hydrogen gas is utilized as the reducing gas, the relation between removal of the volatile organic halogenated compounds and the amount of the added hydrogen in the gas phase is as following. The removal increases extremely with the increase of the amount of the added hydrogen when the amount of the added hydrogen is rather small. However, the increasing removal is less as compared with the increase of the amount of the added hydrogen when the amount of the added hydrogen is large. In this case, the efficiency is low. Similar relation can be observed irrespective of the concentration of the volatile organic halogenated compounds. Because of this relation, the method of multi-stage reduction is more efficient than the method of single stage reduction. When the same amount of the reducing agent, such as a hydrogen gas, is used, the method of multi-stage reduction provides more effective treatment. When the same performance is to be achieved by the two methods, the amount of the reducing agent utilized in the treatment can be decreased by adopting the method of multi-stage reduction.

Thus, it is preferred that a metal catalyst is placed as layers of multiple stages and the fluid containing the volatile organic halogenated compounds is passed through the stages of the catalyst successively while the reducing agent is added before the each catalytic layer.

### Embodiment (vi).

According to this preferred embodiment for conducting the method described above, in each of the stages placed in series, a mixing tank I is placed before the catalyst column A. The number of the stages is not particularly limited if it is two or more. The mixing tank I is not necessary when the water for treatment and the reducing gas, such as a hydrogen gas; is sufficiently mixed by a suitable method.

In case of performing the method with four stages water for treatment (feed water) is charged to the tank I of the first stage and then passes through the catalyst column A of the first stage, the tank I and the catalyst column A of the second stage, the tank I and the catalyst column A of the third stage and the tank for mixing I and the catalyst column A of the fourth stage, successively. The reducing gas, such as hydrogen gas, is fed to each of the mixing tanks of the four stages. The volatile organic halogenated compounds are decomposed by reduction in each of the catalyst columns A of the four stages.

The fluid treated as described above contains unreacted compounds and reaction products, such as hydrogen halides and hydrocarbons, and it is preferably treated with at least one posttreatment selected from the group consisting of an adsorption treatment, a thermal decomposition and a biological decomposition treatment. The adsorbent utilized for the adsorption treatment is activated charcoal, natural or synthetic zeolite, silica gel, activated alumina, silica-alumina or the like. The form of the packed column for the adsorbent is not particularly limited but any of the fixed bed form, the fluidized bed form, the honey comb rotatory form and the like may be adopted.

For the regeneration of the adsorbent which has adsorbed the unreacted compounds and the reaction products, steam or heated gas, such as the heated air and nitrogen, are utilized. The unreacted compounds and the reaction products removed from the adsorbent are preferably recycled to the process of the decomposition by reduction for complete decomposition before they are discharged to the atmosphere. The fluid treated with the adsorption may be either a gas or a liquid.

Hydrocarbons contained in the fluid is decomposed to carbon dioxide and water with the thermal decomposition. The fluid is preferably heated after hydrogen halides contained in the fluid are removed. For removal of the hydrogen halides, a method, such as absorption with an alkaline aqueous solution or water, removal by contact with an adsorbent having sodium hydroxide, potassium hydroxide, calcium hydroxide, sodium carbonate or the like on it and the like other methods, can be utilized.

The treatment of removal of hydrogen halides and the thermal decomposition are generally carried out in the gas phase. It is preferred that the fluid is treated with aeration with the air or the like. The gas generated by the aeration is then introduced to the process of removal of hydrogen halides and to the process of thermal decomposition.

As the method of thermal decomposition, the decomposition by simply heating the fluid, the decomposition by catalytic heat oxidation comprising heat treatment in the presence of a catalyst and other like methods can be utilized. In the method of decomposition by catalytic heat oxidation, the same kinds of metal catalysts as those utilized for decomposition by reduction can be utilized. The air can be mixed with the gas to be treated when necessary. The temperature of the thermal decomposition is generally in the range from about 400 to 500°C in the methods described above.

When the fluid treated with the decomposition by reduction is treated by the biological decomposition, hydrocarbons formed by the decomposition by reduction of the volatile organic halogenated compounds are biologically decomposed easily. For the treatment of the biological decomposition, microorganisms having the ability of decomposing hydrocarbons, such as activated sludge, can be utilized. It is preferred in the method of the biological decomposition that the fluid treated with the decomposition by reduction is a gas. The biological decomposition is generally conducted by bringing the gaseous fluid into contact with the microorganisms having the ability of decomposing hydrocarbons. It is preferred that the fluid is treated with aeration by using the air or the like. The gas from the aeration is then introduced to the process of the biological decomposition.

As the method of bringing the fluid into contact with the material containing the microorganism, the method of passing the fluid through a column packed with the packings to which the microorganisms are fixed, the method of treating the fluid with suspended activated sludge and the like methods can be adopted. When the method with the packed column is adopted, the velocity of the gas passed through the column is 200 to 5000 hr⁻¹ as the space velocity. As the material of the packings, activated charcoal, plastics like polystrene foam, peat, zeolite and the like can be utilized. Water is sprayed on the packings from time to time. When the method of suspended activated sludge is adopted, the gas for the treatment can be introduced into the conventional activated sludge treatment plant.

The adsorption treatment, the thermal decomposition and the treatment of biological decomposition described above may be utilized singly or as a combination of two or more treatments.

When the volatile organic halogenated compounds in the fluid for treatment are flons, hydrogen fluoride is generated during the decomposition treatment by reduction. For preventing degradation of the catalytic activity by the hydrogen fluoride thus formed, a catalyst of a noble metal supported on a carrier resistant against hydrogen fluoride is preferably utilized. Examples of such carrier resistant against hydrogen fluoride are organic carriers, such as resins like polyesters, fluororesins, fibers and the like other organic carriers, and inorganic carriers, such as zeolite, silica, silica alumina, titania, zirconia and the like other inorganic carriers. Examples of the noble metals supported on the carrier are elementary metals, such as platinum, palladium, iridium, rhodium, gold, osmium, silver and rhenium, and multicomponent metals comprising two or more kinds of these metals.

To summarize the advantages obtained by the invention, the method of the invention decomposes efficiently the volatile organic halogenated compounds contained in a fluid (water or gas) by catalytic reduction with a small amount of energy to make the compounds harmless. The method is operated with low cost and practically highly advantageous.

The invention will be understood more readily with reference to the following examples; however, these examples are intended to illustrate the invention and are not to be construed to limit the scope of the invention.

### Example 1

Into a Vial bottle of 22 ml inner volume, 10 ml of a solution containing about 300 ppb of trichloroethylene were taken as a sample. To the solution, 0.5 g of a catalyst, which was prepared by deposition of 0.5 weight % of a metal on γ-alumina and 3.2 mg of hydrazine were added. The mixture was kept stirring well at 25°C. Samples were taken out from the head space at the upper part of the bottle from time to time with a specified time interval and analyzed by a gas chromatography.

Blank tests in which hydrazine was not added were also carried out for comparison. The results are shown in Table 1.

**Table 1**

| catalyst metal | hydrazine | concentration of trichloroethylene in the liquid phase (ppb) | |
|---|---|---|---|
| | | 0.5 hr | 1 hr |
| Ir | added | 169 | - |
| | not added | - | 294 |
| Ru | added | 261 | 267 |
| | not added | - | 309 |
| Pd | added | 10.5 | 2.8 |
| | not added | - | 308 |
| Pt | added | 24.8 | 12.2 |
| | not added | - | 273 |

### Example 2

Trichloroethylene was decomposed by the same method as in Example 1 except that a solution containing about 200 ppb of trichloroethylene was used, that palladium was used as the catalyst metal and that a carrier selected from various kinds was used. The results are shown in Table 2.

**Table 2**

| catalyst carrier | hydrazine | concentration of trichloroethylene in the liquid phase (ppb) | |
|---|---|---|---|
| | | 0.5 hr | 1 hr |
| zirconia | added | 65.6 | 48 |
| | not added | - | 192 |
| silica gel | added | 147 | 132 |
| | not added | 196 | 201 |
| strong basic anion | added | - | 28 |
| exchange resin | not added | - | 56 |

### Example 3

Into a column of 15 mm in inner diameter, 16.2 g of a catalyst in which 0.5 weight % of palladium is supported on γ-alumina were packed to form a catalyst layer of 100 mm in length. A solution containing about 300 ppb of trichloroethylene taken from a feed water tank was passed through the column with the velocity of about 10 hr⁻¹ SV by using a pump. At the same time, an aqueous solution of hydrazine was introduced to the column from a tank of the aqueous solution of hydrazine by using a pump in such a way that the concentration of hydrazine in the water for treatment is adjusted to 250 ppm. After the treated water was taken into a sampling bottle and stirred, samples were taken from the head space of the sampling bottle and analyzed by a gas chromatography. The temperature of the treatment was 25°C. The results are shown in Table 3.

**Table 3**

| time of passing of water (hr) | concentration of trichloroethylene in the liquid phase (ppb) | removal (%) |
|---|---|---|
| 1 | 23.6 | 91.8 |
| 2 | 11.3 | 96.1 |
| 4 | 15.4 | 94.7 |
| 8 | 11.7 | 95.9 |

### Example 4

Samples containing volatile organic halogenated compounds were treated by the same method as in Example 3 except that various kinds of volatile organic halogenated compounds were used in place of trichloroethylene. The results are shown in Table 4.

**Table 4**

| volatile organic halogenated compound | hydrazine | concentration in the liquid phase (ppb) | | initial concentration (ppb) |
|---|---|---|---|---|
| | | 0.5 hr | 1 hr | |
| chloroform | added | 202 | 182 | 535 |
| | not added | 555 | 578 | |
| carbon tetrachloride | added | 20 | 13 | 542 |
| | not added | 503 | 542 | |
| 1,1,1-trichloroethane | added | 84 | 78 | 357 |
| | not added | 327 | 389 | |
| tetrachloroethylene | added | 223 | 187 | 324 |
| | not added | - | 331 | |

### Example 5

To about 2 liter of nitrogen gas containing about 5.5 volume ppm of trichloroethylene gas, 0.5 g of a palladium catalyst containing 0.5 weight % of palladium supported on alumina and 2.24 ml of hydrogen gas were added and mixed well by stirring at 25°C. Samples were taken out from time to time with a specified time interval and analyzed by a gas chromatography.

For comparison, a mixture without addition of hydrogen gas with addition of the catalyst alone, a mixture without addition of the catalyst with addition of hydrogen gas alone and a mixture without addition of both of hydrogen gas and the catalyst were treated by the same method. The results are shown in Table 5.

**Table 5**

| No. | catalyst | hydrogen | concentration of trichloroethylene gas (vol. ppm) | | | |
|---|---|---|---|---|---|---|
| | | | initial | time after addition of hydrogen | | |
| | | | | 10 min | 30 min | 1 hr |
| 1 | none | none | 5.6 | 5.6 | 5.9 | 6.2 |
| 2 | added | added | 4.2 | 2.2 | 0.6 | 0.2 |
| 3 | added | none | 4.3 | 4.4 | 4.3 | - |
| 4 | none | added | 4.4 | 4.3 | 4.4 | - |

### Example 6

An apparatus for the following processes was constructed: feed water is introduced into an air-stripping tower; a nitrogen gas is blown into the air-stripping tower from a nitrogen receiver; the aeration gas obtained by this process is taken out from the upper part of the air-stripping tower and mixed with hydrogen gas; the mixed gas is introduced into the column packed with a catalyst; and the volatile organic halogenated compounds are decomposed by reduction.

To the air-stripping tower of 1.7 m in diameter and 7.5 m in height packed with Net Ring TS-1®, feed water containing 100 µg/l of trichoroethylene was introduced at the speed of 90 m³/hr. The water was treated with aeration by passing 3000 m³/hr of nitrogen gas based on the standard condition. The concentration of trichloroethylene in the treated water was 2 µg/l or less. The concentration of trichloroethylene was 0.5 volume ppm and the concentration of oxygen was 300 volume ppm in the gas discharged from the outlet of the tower.

Hydrogen gas was added to the gas discharged from the outlet of the air-stripping tower at the speed of 90 g/hr and the mixed gas was introduced to a catalytic decomposition tower of 1.2 m in diameter and 1.5 m in height packed with 1500 kg of pellets of 0.5 % platinum supported on γ-alumina having size of 3 mm in diameter and 3 mm in length. Trichloroethylene was not detected at the outlet of the catalytic decomposition tower. The nitrogen gas could be used repeatedly by recycling.

### Example 7

### Ion exchange pre-treatment of feed water

To a prepared water (feed water) having the quality shown in Table 6, hydrogen was dissolved at the partial pressure of hydrogen of 3 kg/cm²·G and the water was then passed through a catalyst column having 40 mm in inner diameter and 200 mm in height packed with about 250 g of a platinum catalyst containing 0.5 weight % of platinum supported on γ-alumina at the speed of SV 20 hr⁻¹. The ability of the treatment varied with time. The initial removal was about 90 %. The removal decreased to 50 to 60 % after the the feed water of about 100 BV was treated. The quality of the treated water (A) is shown in Table 6.

The feed water was passed through the ion exchange column having 100 mm in inner diameter and 120 mm in height packed with about 1 liter of a sodium type ion exchange resin PK-228® at the speed of SV 10 to 20 hr⁻¹. The water (B) treated with the ion exchange resin having the quality shown in Table 6 was treated with decomposition by reduction under the conditions described above in the liquid phase. After about 100 BV of the water for treatment had been passed through the column, the ability of treatment was almost the same value of about 85 %, showing no such decrease of the ability with time as described above. The quality of the treated water (C) is shown in Table 6.

**Table 6**

| | feed water (prepared water) | treated water | | |
|---|---|---|---|---|
| | | A after passing 100 BV | B after treatment with ion exchange | C after passing 100 BV |
| quality of water | | | | |
| trichloroethylene (mg/l) | 1.0 | 0.50 | 0.81 | 0.15 |
| cis-dichloroethylene (mg/l) | 1.0 | 0.41 | 0.72 | 0.11 |
| Ca²⁺ (mg/l) | 37.2 | 32.1 | 0.25 | 0.21 |
| Mg²⁺ (mg/l) | 16.1 | 12.1 | 0.08 | 0.08 |
| total Fe (mg/l) | 7.21 | 3.06 | 1.76 | 1.62 |
| pH | 7.3 | 7.7 | 7.5 | 7.8 |

### Example 8

### Chelate exchange treatment of feed water

The same feed water as that used in Example 7 was treated with a chelate exchange resin PT207® by the same method as that with the ion exchange resin in Example 7. The water treated with the chelate exchange resin was then treated with the decomposition by reduction in the liquid phase by the same method as that in Example 7. The removal of the treatment stayed at about the same level of 80 to 90 % though the values were somewhat scattered.

### Examples 9 to 11

Samples of the feed water containing trichoroethylene of the concentrations shown in Table 7 were treated in a manner as described in embodiment (i). The removal of trichloroethylene is shown in Table 7.

The reaction column of 20 mm in inner diameter and 300 mm in length was packed with a catalyst containing 0.5 weight % of platinum supported on γ-alumina of 1/8 inch pellets to the height of 100 mm in the column. Glass beads of about 2 mm in diameter were packed in the upper part of the catalyst column.

The feed water was passed through this catalyst column at the speed of 5 ml/min and at the space velocity to the catalyst column of 10 hr⁻¹. Hydrogen gas was provided at the feeding pressure of 1 kg/cm²·G.

### Example 12

Samples of the feed water containing tetrachloroethylene with the concentrations shown in Table 7 were treated by the same method as that in Examples 9 to 11 and then the removal of tetrachloroethylene was measured. The results are shown in Table 7.

**Table 7**

| Example | volatile organic halogenated compound in feed water | | removal of volatile organic halogenated compound (%) |
|---|---|---|---|
| | compound | concentration (mg/l) | |
| 9 | trichloroethylene | 12 | ca. 99 or more |
| 10 | trichloroethylene | 19 | ca. 99 or more |
| 11 | trichloroethylene | 26 | ca. 99 or more |
| 12 | tetrachloroethylene | 14 | ca. 95 |

### Example 13

### Heating of the gas for treatment in the catalyst column

Water containing trichloroethylene was introduced to an air-stripping tower and sprayed at the top of the tower while the air was sent from the bottom by a blower to bring them into the counter current contact with each other. A gas containing 0.5 volume ppm of trichloroethylene and having relative humidity of 90 % at 25°C was obtained by the treatment.

The gas containing trichloroethylene was passed through a catalyst column having 30 mm in inner diameter and 70 mm in length packed with about 50 g of a catalyst containing 0.5 weight % of platinum supported on γ-alumina at the speed of SV 12,000 hr⁻¹ together with hydrogen gas supplied from a hydrogen generator. The concentration of trichloroethylene in the effluent gas at the outlet of the catalyst column was almost equal to that of the feed gas after 8 hours from starting of the addition of hydrogen.

The decomposition treatment by reduction in the gas phase was continued for 7 days in the same condition as that described above except that water kept at the constant temperature of about 40°C was circulated through the jacket of the column to heat the catalyst column. The rate of removal of trichloroethylene by the treatment did not change with time and stayed at the same value of about 85 %.

### Example 14

### Dilution with dry air

An air containing 0.5 volume ppm of trichloroethylene and having relative humidity of 90 % at 25°C was obtained by the same method as that in Example 13. Dry air having about 0 % relative humidity prepared in a PSA apparatus was mixed to the air at 1 : 1 volume ratio. The mixed gas was then passed through the catalyst column by the same method as that in Example 13 for the decomposition treatment by reduction. The removal of trichloroethylene was about 80 to 90 % and the treatment was continued for 7 days.

As the PSA apparatus, two adsorption towers of 0.5 liter volume, 40 mm in diameter and 400 mm in height packed with a synthetic zeolite 5A were utilized. The operation was made under the conditions of 9 kgf/cm² adsorption pressure and 10 minutes cycle time.

### Example 15

### Removal of humidity with a cation exchange resin

An air containing 0.5 volume ppm trichloroethylene and having 90 % relative humidity at 25°C was obtained by the same method as that in Example 13 and then passed through a column of 30 mm in inner diameter and 700 mm in length packed with 500 ml of a sodium type strong cation exchange resin SK1B® at the speed of SV 5,000 hr⁻¹. The concentration of trichloroethylene at the outlet remained about the same as that at the inlet of the column, showing that trichloroethylene was not adsorbed by the resin. The relative humidity of the gas was reduced to 1 % or less at the outlet.

The dehumidified gas obtained above was used for the decomposition treatment by reduction by passing it through the catalyst column by the same method as that in Example 13. Trichloroethylene was not detected in the treated gas at the outlet of the column. The treatment was continued for 30 hours. The operation was stopped after 30 hours and the ion exchange resin was heated to 150°C for 1 hour to remove water by vaporization. When the operation was resumed by the same condition, the operation could be continued for further 30 hours without any problem.

### Example 16

An underground water containing 50 ppm of trichloroethylene was introduced to the air-stripping tower of 1.7 m in diameter and 7.5 m in height and sprayed from the top of the tower at the speed of 9 m³/hr while the air was blown at the speed of 300 Nm³/hour to bring them into the counter current contact with each other. After the treatments made twice in series, the concentration of trichloroethylene in the treated water at the outlet of the air-stripping tower was 20 ppb and the concentration of trichloroethylene in the discharged air was about 100 volume ppm.

The discharged air was led to a rotor type adsorption apparatus using about 2.6 kg of activated carbon fiber as an adsorbent for adsorption of trichloroethylene. The concentration of trichloroethylene in the treated gas was about 2 volume ppm.

The treated gas was introduced to the catalyst column packed with 60 kg of a platinum catalyst containing 0.5 weight % of platinum supported on γ-alumina and hydrogen gas was mixed to the gas at the inlet of the catalyst column at the speed of 3 Nm³/h. Trichloroethylene was not detected in the treated gas at the outlet of the catalyst column.

When steam was introduced to the column containing the activated carbon fiber, a condensed water containing 170 ppm of trichloroethylene was discharged from the column.

The condensed water was recycled to the feed water tank.

### Example 17

### The apparatus as described in embodiment (iii) was used in this example.

An underground water containing 0.1 ppm of trichloroethylene was introduced to the air-stripping tower of 1.7 m in diameter and 7.5 m in height packed with Net Ring TS-1® to the height of 3 m and sprayed from the top of the tower at the speed of 90 m³/hr while the air was blown from the bottom of the tower at the speed of 3000 Nm³/hr to bring them into the counter current contact with each other. The concentration of trichloroethylene in the water at the outlet of the air-stripping tower was 2 ppb and the concentration of trichloroethylene in the exhausted air was 0.5 volume ppm.

The exhausted air was introduced to the adsorption tower F packed with a granular activated charcoal Shirasagi SX 4-6 mesh® (a product of Takeda Chemical Industries Co., Ltd.) to the height of 0.3 m and the diameter of 1.7 m for adsorption of trichloroethylene. The concentration of trichloroethylene in the air after the adsorption treatment remained at 0.05 volume ppm or less until the time of the operation reached 120 hours. The operation of the activated charcoal adsorption tower was stopped after 120 hours and the air inside was purged with 7 Nm³ of nitrogen gas.

For regeneration of the activated charcoal, nitrogen gas heated to 150°C was passed through the tower at the speed of 300 Nm³/hr for desorption of trichloroethylene from the activated charcoal. To the gas discharged from the desorption process, 60 g (672 liter) of hydrogen gas was added and the mixed gas was introduced to the catalytic decomposition tower A packed with 60 kg of the palladium-γ-alumina catalyst.

Nitrogen gas mixed with hydrogen gas was circulated in a closed cycle from the activated charcoal adsorption tower F to the catalytic decomposition tower A for 15 minutes using a compressor. Trichloroethylene was not detected in the nitrogen gas after 15 minutes.

### Example 18

The apparatus as described in embodiment (iv) was used in this example.

An underground water containing 0.1 ppm of trichloroethylene was introduced to the air-stripping tower of 1.7 m in diameter and 7.5 m in height packed with Net Ring TS-1® to the height of 3 m and sprayed from the top of the tower at the speed of 9 m³/hr while the air was blown at the speed of 300 Nm³/hr to bring them into the counter current contact with each other. The concentration of trichloroethylene in the water at the outlet of the tower was 2 ppb and the concentration of trichloroethylene in the discharged air was 0.5 volume ppm.

The discharged air was introduced to the rotor type adsorption tower F packed with about 2.6 kg of the activated carbon fiber for adsorption of trichloroethylene. The concentration of trichloroethylene in the air after the adsorption treatment remained at 0.05 volume ppm or less until the time of the operation reached 10 hours. The operation of the activated carbon fiber adsorption tower was stopped after 10 hours and then the activated carbon fiber was regenerated by feeding steam of 4 kg/cm² at the speed of 25 kg/hr. The time required for the regeneration was about 1 hour.

Water obtained by cooling the gas discharged from the regeneration to the room temperature by a condenser contained 350 ppm of trichloroethylene. This water was not reused but treated with decomposition by dissolving hydrogen gas into the water with the partial pressure of hydrogen of 3 to 4 kg/cm², followed by circulation in the catalyst tower A packed with 2 liter of a platinum/γ-alumina catalyst at the speed of SV 50 hr⁻¹. Trichloroethylene was not detected in the recycled water after 5 hours.

### Example 19

The apparatus described in embodiment (v) was used in this example.

The regeneration water obtained in Example 18 was sent to the aeration tank H and a gas containing the volatile organic halogenated compounds was obtained by aeration with nitrogen gas at the speed of 3 Nm³/hr. Hydrogen gas was added to the gas thus obtained at the speed of 2 g/hr and the mixed gas was treated by the same method as that in Example 18 except that the gas was circulated in the catalyst tower A packed with 1 liter of the same catalyst as that in Example 18. Trichloroethylene was not detected in the gas thus treated after 30 minutes.

### Example 20

Underground water containing 0.1 mg/l of trichloroethylene was introduced to the air-stripping tower of 1.7 m in diameter and 7.5 m in height and sprayed from the top of the tower at the speed of 90 m³/hr while the air was blown at the speed of 3000 Nm³/hr to bring them into the counter current contact with each other. The concentration of trichloroethylene in the water at the bottom of the tower was about 2 µg/l and the concentration of trichloroethylene in the discharged gas at the top of the tower was 0.5 volume ppm. The relative humidity was 90 % or more.

Hydrogen was added to the discharged gas obtained above at the speed of 6 Nm³/hr and the mixed gas was introduced to the catalyst tower of 2 m in inner diameter and 0.3 m in height packed with 750 kg of a platinum/γ-alumina catalyst containing 0.5 weight % of platinum (1/8 inch pellets) supported on γ-alumina. The rate of removal of trichloroethylene was 80 to 90 % or more in the period of 2 hours after the start of the operation. However, after 3 hours or more of the operation, trichloroethylene was removed by decomposition only to a negligible degree.

The same discharged gas was treated by the same method as that in the above except that a catalyst with hydrophobic treatment by coating of polytetrafluoroethylene on the platinum/γ-alumina catalyst containing 0.5 weight % of platinum (1/8 inch pellets) was used. Trichloroethylene in the discharged gas could be removed by decomposition at a constant removal of about 70 to 90 % for 50 hours in the catalyst tower.

### Example 21

Hydrogen was dissolved in an underground water containing 0.35 mg/l of trichloroethylene at the partial pressure of hydrogen of 3 kg/cm². The water thus prepared was introduced to the catalyst tower of 100 mm in inner diameter and 100 mm in height packed with about 0.8 kg of a platinum/γ-alumina catalyst containing 0.5 weight % of platinum (1/8 inch pellets) at the speed of 16 l/hr (SV = 20 hr⁻¹). The removal of trichloroethylene was about 70 % during the initial period of the operation. The removal was decreased with time and became about 40 % after 5 hours of the treatment. The catalyst column was colored red brown.

Then, the same water was treated according to the same operation as that described above except that the catalyst with hydrophobic treatment by coating of polytetrafluoroethylene on the platinum/γ-alumina catalyst containing 0.5 weight % of platinum (1/8 inch pellets) was used. The initial removal of trichloroethylene was about 85 % and no change in the ability of the treatment was found after 5 hours of the continuous operation.

### Example 22

An underground water containing 0.1 mg/l of trichloroethylene was introduced to an air-stripping tower of 1.7 m in diameter and 7.5 m in height and sprayed from the top of the tower at the speed of 9 m³/hr while the air was blown from the bottom of the tower at the speed of 300 Nm³/hr to bring them into the counter current contact with each other. The concentration of trichloroethylene in the water at the bottom of the tower was about 2 µg/l and the concentration of trichloroethylene in the discharged gas at the top of the tower was 0.5 volume ppm.

Hydrogen was added to the discharged gas obtained above at the speed of 3.0 Nm³/hr and the mixed gas was introduced to a catalyst tower of 1.2 m in inner diameter and 0.8 m in height packed with 750 kg of a platinum/γ-alumina catalyst containing 0.5 weight % of platinum (1/8 inch pellets). Trichloroethylene was not detected in the gas discharged from the catalyst tower.

The gas discharged from the catalyst tower was passed through the apparatus for removing hydrochloric acid. The apparatus has a column for absorption of hydrochloric acid gas containing 300 liter of 5 weight % aqueous solution of sodium hydroxide. The discharged gas was passed through the apparatus for thermal decomposition using about 500 liter of a platinum catalyst at the speed of 600 hr⁻¹ SV and the temperature of 400 to 450°C. In the gas discharged from this apparatus, none of trichloroethylene and hydrochloric acid was detected and no hydrocarbon, such as ethane and methane, was detected either. Thus, the discharged gas could be disposed in the atmosphere without any further treatment.

### Example 23

An apparatus of biological decomposition for the following processes was constructed: feed water was introduced to an air-stripping tower; the air was blown into the feed water in the stripping tower from a blower; the aeration gas from this process was taken out from the top of the stripping tower; the aeration gas thus obtained was mixed with hydrogen gas; the mixed gas was introduced into a column packed with a reducing catalyst to reduce volatile organic halogenated compounds; and the mixed gas was introduced to a column packed with packings on which microorganisms were supported for biological decomposition of the hydrocarbons formed by the reduction.

Feed water containing 100 µg/l of trichloroethylene was introduced to an air-stripping tower of 1.7 m in diameter and 7.5 m in height packed with Net Ring TS-1® at the speed of 90 m³/hr and then treated by aeration by passing the air at the speed of 3000 m³/hr based on the standard condition. Trichloroethylene in the treated water was 2 µg/l or less and the concentration of trichloroethylene in the gas at the outlet of the air-stripping tower was 0.5 volume ppm.

To the gas discharged from the air-stripping tower, hydrogen was added at the speed of 30 Nm³/hr and the mixed gas was introduced to a catalytic decomposition tower of 1.2 m in diameter and 1.5 m in height packed with 1500 kg of pellets of 3 mm in diameter and 3 mm length of the platinum-alumina catalyst containing 0.5 weight % of platinum. Trichloroethylene was not detected in the gas discharged from the outlet of the catalyst tower. The gas discharged from the outlet of the catalyst tower was introduced without further treatments to a biological decomposition tower of 1000 mm in diameter and 7200 mm in height packed with 3600 mm in height of peat column to which microorganisms had been loaded by spraying sewage water at the speed of 3,000 hr⁻¹ SV.

Hydrocarbons, such as ethylene, methane and the like, were not detected in the gas discharged from the biological decomposition tower.

As Comparative Example, an operation was run by the same method as that described above except that the catalyst tower was eliminated and hydrogen gas was not added and the ability to remove trichloroethylene was evaluated. The results are shown in Table 8. The analysis was made by using a gas chromatography.

**Table 8(1)**

| | Example 23 | | | Comparative Example |
|---|---|---|---|---|
| | trichloroethylene | ethylene | methane | trichloroethylene |
| after 10 hours | ND | ND | ND | 0.5 |
| after 50 hours | ND | ND | ND | 0.6 |
| after 100 hours | ND | ND | ND | 0.4 |
| after 200 hours | ND | ND | ND | 0.5 |
| 1) Concentration of the compounds shown in the table at the outlet of the catalyst tower was analyzed. ND means that the compound was not detected. The number shows the concentration of the compound in volume ppm. | | | | |

While the invention has been particularly shown and described with reference to preferred embodiments thereof, it will be understood by those skilled in the art that the foregoing and other changes in form and details can be made therein without departing from the scope of the invention.

## Claims

1. A method of decomposing volatile organic halogenated compounds in water containing the volatile organic halogenated compounds in an amount of 20 ppm or less and metal ions, which comprises removing the metal ions from the water by one or more treatments selected from the group consisting of an ion exchange treatment, a chelate resin treatment and an oxidation-coagulation-precipitation treatment and then contacting the metal ion deionized water with a reducing agent in the presence of a metal catalyst.

2. A method of decomposing volatile organic halogenated compounds in water as claimed in Claim 1, wherein the water containing the volatile organic halogenated compounds is obtained by extraction of service water, underground water or soil.

3. A method of decomposing volatile organic halogenated compounds in water as claimed in Claim 1, wherein the water containing 20 ppm or less of the volatile organic halogenated compounds is brought into contact with the reducing agent at a temperature of 10 to 60°C.

4. A method of decomposing volatile organic halogenated compounds in water as claimed in Claim 1, wherein the metal catalyst is palladium and/or platinum supported on carrier.

5. A method of decomposing volatile organic halogenated compounds in water as claimed in Claim 4, wherein the ratio of the metal to carrier in the metal catalyst is in the range from 0.1 to 10 weight %.

6. A method of decomposing volatile organic halogenated compounds in water as claimed in Claim 1, wherein amount of the reducing agent is 1 to 80 times the equivalent amount required to decompose the volatile organic halogenated compounds.

7. A method of decomposing volatile organic halogenated compounds in water as claimed in Claim 1, wherein the reducing agent is dissolved in water containing 20 ppm or less of the volatile organic halogenated compounds before the water is brought in contact with the metal catalyst.

8. A method of decomposing volatile organic halogenated compounds in water as claimed in Claim 1, wherein the water containing the volatile organic halogenated compounds in an amount of 20 ppm or less and metal ions is obtained by partially removing the volatile organic halogenated compounds from water containing the volatile organic halogenated compounds discharged from manufacturing processes by bringing the water in contact with an adsorbent.

9. A method of decomposing volatile organic halogenated compounds in water as claimed in Claim 8, wherein the water containing the volatile organic halogenated compounds in an amount of 20 ppm or less and metal ions is concentrated water discharged by regeneration of an adsorbent which has been used for removing the organic halogenated compounds from water containing them with steam.

10. A method of decomposing volatile organic halogenated compounds in water as claimed in Claim 1, wherein the metal catalyst is supported on a carrier treated with a hydrophobic compound.

11. A method of decomposing volatile organic halogenated compounds in water as claimed in Claim 1, wherein the process of of bringing the water containing 20 ppm or less of the volatile organic halogenated compounds into contact with the reducing agent in the presence of the metal catalyst is followed by treating the water with at least one treatment selected from the group consisting of an adsorption treatment, a thermal decomposition treatment and a biological decomposition treatment.

## Patentansprüche

1. Verfahren zur Zersetzung von flüchtigen organischen halogenierten Verbindungen in Wasser, enthaltend die flüchtigen organischen halogenierten Verbindungen in einer Menge von 20 ppm oder weniger und Metallionen, welches Entfernen der Metallionen aus dem Wasser durch eine oder mehrere Behandlungen umfaßt, die aus der aus einer Ionenaustauschbehandlung, einer Chelatharzbehandlung und einer Oxidations-Koagulations-Ausfällungsbehandlung bestehenden Gruppe ausgewählt werden, und dann In-Kontakt-bringen des Metallionen-deionisierten Wassers mit einem Reduktionsmittel in Gegenwart eines Metall-Katalysators.

2. Verfahren zur Zersetzung von flüchtigen organischen halogenierten Verbindungen in Wasser wie in Anspruch 2 beansprucht, wobei das die flüchtigen organischen halogenierten Verbindungen enthaltende Wasser erhalten wird durch Extraktion von Brauchwasser, Grundwasser oder Boden.

3. Verfahren zur Zersetzung von flüchtigen organischen halogenierten Verbindungen in Wasser wie in Anspruch 1 beansprucht, wobei das die 20 ppm oder weniger der flüchtigen organischen halogenierten Verbindungen enthaltende Wasser bei einer Temperatur von 10 bis 60°C in Kontakt mit dem Reduktionsmittel gebracht wird.

4. Verfahren zur Zersetzung von flüchtigen organischen halogenierten Verbindungen in Wasser wie in Anspruch 1 beansprucht, wobei der Metall-Katalysator Palladium und/oder Platin auf einem Träger ist.

5. Verfahren zur Zersetzung von flüchtigen organischen halogenierten Verbindungen in Wasser wie in Anspruch 4 beansprucht, wobei das Verhältnis von Metall zu Träger im Metall-Katalysator im Bereich von 0,1 bis 10 Gew.-% liegt.

6. Verfahren zur Zersetzung von flüchtigen organischen halogenierten Verbindungen in Wasser wie in Anspruch 1 beansprucht, wobei die Menge an Reduktionsmittel das 1- bis 80-fache der äquivalenten Menge beträgt, die zur Zersetzung der flüchtigen organischen halogenierten Verbindungen erforderlich ist.

7. Verfahren zur Zersetzung von flüchtigen organischen halogenierten Verbindungen in Wasser wie in Anspruch 1 beansprucht, wobei das Reduktionsmittel im 20 ppm oder weniger der flüchtigen organischen halogenierten Verbindungen enthaltenden Wasser gelöst wird, bevor das Wasser in Kontakt mit dem Metall-Katalysator gebracht wird.

8. Verfahren zur Zersetzung von flüchtigen organischen halogenierten Verbindungen in Wasser wie in Anspruch 1 beansprucht, wobei das die flüchtigen organischen halogenierten Verbindungen in einer Menge von 20 ppm oder weniger und Metallionen enthaltende Wasser erhalten wird, indem die flüchtigen organischen halogenierten Verbindungen partiell durch In-Kontakt-bringen des Wassers mit einem Adsorbens aus dem die flüchtigen organischen halogenierten Verbindungen enthaltenden Wasser entfernt werden, das aus Herstellungsprozessen gewonnen wird,.

9. Verfahren zur Zersetzung von flüchtigen organischen halogenierten Verbindungen in Wasser wie in Anspruch 8 beansprucht, wobei das die flüchtigen organischen halogenierten Verbindungen in einer Menge von 20 ppm oder weniger und Metallionen enthaltende Wasser konzentriertes Wasser ist, das aus der Regeneration eines Adsorbens mit Dampf erhalten wird, welches zur Entfernung der organischen halogenierten Verbindungen aus sie enthaltendem Wasser verwendet wurde.

10. Verfahren zur Zersetzung von flüchtigen organischen halogenierten Verbindungen in Wasser wie in Anspruch 1 beansprucht, wobei der Metall-Katalysator auf einem mit einer hydrophoben Verbindung behandelten Träger aufgebracht ist.

11. Verfahren zur Zersetzung von flüchtigen organischen halogenierten Verbindungen in Wasser wie in Anspruch 1 beansprucht, wobei das Verfahren des In-Kontakt-bringens des 20 ppm oder weniger der flüchtigen organischen halogenierten Verbindungen enthaltenden Wassers mit dem Reduktionsmittel in Gegenwart des Metall-Katalysators gefolgt wird von Behandeln des Wassers mit mindestens einer Behandlung, die ausgewählt wird aus der aus einer Adsorptionsbehandlung, einer thermischen Zersetzungsbehandlung und einer biologischen Zersetzungsbehandlung bestehenden Gruppe.

## Revendications

1. Procédé de décomposition dans l'eau de composés halogénés organiques volatils contenant les composés halogénés organiques volatils en une quantité de 20 ppm ou moins et des ions métalliques, qui comprend les opérations consistant à éliminer les ions métalliques de l'eau par un ou plusieurs traitements choisis entre un traitement d'échange d'ions, un traitement par une résine chélatante et un traitement d'oxydation-coagulation-précipitation et à mettre en contact ensuite l'eau désionisée contenant des ions métalliques avec un agent réducteur en présence d'un catalyseur métallique.

2. Procédé de décomposition dans l'eau de composés halogénés organiques volatils selon la revendication 1, dans lequel l'eau contenant les composés halogénés organiques volatils est obtenue par extraction d'eau industrielle, d'eau souterraine ou du sol.

3. Procédé de décomposition dans l'eau de composés halogénés organiques volatils selon la revendication 1, dans lequel l'eau contenant 20 ppm ou moins des composés halogénés organiques volatils est mise en contact avec l'agent réducteur à une température de 10 à 60°C.

4. Procédé de décomposition dans l'eau de composés halogénés organiques volatils selon la revendication 1, dans lequel le catalyseur métallique est du palladium et/ou du platine déposé sur un support.

5. Procédé de décomposition dans l'eau de composés halogénés organiques volatils selon la revendication 4, dans lequel le rapport du métal par rapport au support dans le catalyseur métallique est dans la gamme de 0,1 à 10% en poids.

6. Procédé de décomposition dans l'eau de composés halogénés organiques volatils selon la revendication 1, dans lequel la quantité d'agent réducteur est comprise entre 1 et 80 fois la quantité équivalente nécessaire pour décomposer les composés halogénés organiques volatils.

7. Procédé de décomposition dans l'eau de composés halogénés organiques volatils selon la revendication 1, dans lequel l'agent réducteur est dissous dans l'eau contenant 20 ppm ou moins des composés halogénés organiques volatils avant que l'eau ne soit mise en contact avec le catalyseur métallique.

8. Procédé de décomposition dans l'eau de composés halogénés organiques volatils selon la revendication 1, dans lequel l'eau contenant les composés halogénés organiques volatils en une quantité de 20 ppm ou moins et des ions métalliques est obtenue en éliminant partiellement les composés halogénés organiques volatils de l'eau contenant les composés halogénés organiques volatils déversée de procédés de fabrication en amenant l'eau au contact d'un absorbant.

9. Procédé de décomposition dans l'eau de composés halogénés organiques volatils selon la revendication 8, dans lequel l'eau contenant les composés halogénés organiques volatils en une quantité de 20 ppm ou moins et des ions métalliques est de l'eau concentrée déversée par régénération d'un absorbant qui a été utilisé pour éliminer avec de la vapeur les composés halogénés organiques de l'eau les contenant.

10. Procédé de décomposition dans l'eau de composés halogénés organiques volatils selon la revendication 1, dans lequel le catalyseur métallique est déposé sur un support traité avec un composé hydrophobe.

11. Procédé de décomposition dans l'eau de composés halogénés organiques volatils selon la revendication 1, dans lequel le procédé consistant à mettre en contact l'eau contenant 20 ppm ou moins des composés halogénés organiques volatils avec l'agent réducteur en présence du catalyseur métallique est suivi par le traitement de l'eau avec au moins un traitement choisi parmi un traitement d'absorption, un traitement de décomposition thermique et un traitement de décomposition biologique.
